# FASCICULE DE BREVET EUROPEEN

(11) **EP 1 960 224 B1**
(45) Date de publication et mention de la délivrance du brevet: **29.06.2011**
(21) Numéro de dépôt: 06842017.3
(22) Date de dépôt: 21.11.2006
(51) Int. Cl.: B60W 20/00, B60W 10/08

(54) **PROCEDE ET DISPOSITIF DE CONTROLE ET DE SUPERVISION D'UN VEHICULE HYBRIDE DU TYPE COMPORTANT QUATRE ROUES MOTRICES**
VERFAHREN UND VORRICHTUNG ZUR STEUERUNG UND ÜBERWACHUNG EINES HYBRIDFAHRZEUGS MIT ALLRADANTRIEB
METHOD AND DEVICE FOR CONTROLLING AND MONITORING A HYBRID FOUR-WHEEL DRIVE VEHICLE

(30) Priorité: 08.12.2005 FR 0553784
(43) Date de publication de la demande: 27.08.2008
(73) Titulaire: Renault s.a.s., 92100 Boulogne Billancourt (FR)
(72) Inventeur: CLAEYS, Xavier, F-78000 Versailles (FR); POGNANT-GROS, Philippe, F-92500 Rueil-Malmaison (FR); POTHIN, Richard, F-78760 Jouars-Pontchartrain (FR)
(86) Numéro de dépôt international: PCT/FR2006/051206
(87) Numéro de publication internationale: WO 2007/066023

(56) Documents cités:
- EP-A- 1 533 166
- WO-A-2004/106101
- US-A1- 2003 037 977
- US-A1- 2003 132 044
- US-A1- 2004 147 366

## Description

L'invention concerne un procédé et un dispositif de contrôle et de supervision d'un véhicule hybridé du type comportant quatre roues motrices. Plus particulièrement, l'invention concerne un procédé et un dispositif de contrôlé et de supervision d'un train arrière d'un véhicule hybride à quatre roues motrices, axant pour moyen de propulsion et/ou de traction du véhicule au moins une machine électriques alimentée par une batterie haute tension et un moteur thermique. Le procédé permet de retranscrire la volonté du conducteur, comme un appui sur la pédale d'accélérateur, en consignes de commande à envoyer a des actionneurs électriques et mécanique.

Les avantages des véhicules électrique sont connus et proviennent notamment du caractère silencieux et non polluant de lueur moteur. La question de la recharge de leur batterie est sensiblement améliorée par les véhicules hybrides qui permettent d'atteindre des niveaux d'autonomie et de performances peu réalisables dans le cas d'un véhicule purement électrique.

Le problème technique à la base de l'invention a été identifié par le demandeur dans le cadre d'études sur de nouveaux véhicules hybrides à quatre roues motrices, équipés d'une source de puissance mécanique indépendante sur claque train. Le train avant du véhicule est entraîné par un groupe motopropulseur classique avec un moteur à explosions et une boite de vitesses manuelle, robotisée ou automatique. Le train arrière est entraîné par un actionneur électrique qui est une machine électrique capable de fournir un couple et une puissance à la roue par l'intermédiaire d'un différentiel. L'élément de stockage énergétique comporte une batterie pour fournir ou recevoir de l'énergie provenant de la machine électrique fonctionnant soit en moteur, soit en générateur. Ainsi, la machine électrique fonctionnant en moteur est capable de fournir un couple et une puissance demandé aux roues d'un train donné.

Le moteur thermique associé au moteur électrique dans ce genre de véhicule hybride permet soit d'apporter un complément de puissance pour des trajets sur route, soit de recharger la batterie ou bien à l'aide d'une génératrice de courant ou bien à l'aide du moteur électrique quand il est réversible et qu'il fonctionne en générateur.

Dans l'état de la technique, la supervision d'un véhicule hybride met en oeuvre une fonction de supervision qui permet de transformer la volonté du conducteur en consignes de commande à envoyer simultanément à la machine électrique et au moteur thermique. Une telle supervision doit aussi assurer une sécurité minimale du comportement du véhicule tel que le pilotage du train arrière pour satisfaire un critère de stabilité du véhicule lorsqu'il fonctionné en mode « quatre roues motrices ». Le dispositif de supervision doit aussi assurer la sécurité des organes électriques tels que la batterie haute tension et la machine électrique, particulièrement le contrôle de la puissance admissible en charge et en décharge par la batterie.

Des solutions pour superviser la gestion des commandes du véhicule hybride avec un train équipé d'un moteur électrique et un train équipé d'un moteur thermique sont connues de l'état de la technique. Le document US-2002/0057582 décrit et représente un contrôleur de gestion de l'alimentation électriques d'un tel véhicules hybride. Mais ce contrôleur permet seulement de limiter la conversion d'énergie électrique provenant de la batterie qui alimente notamment la machine électrique afin de prévenir une décharge excessive de la batterie et de protéger les organes électriques du véhicule. Le contrôleur agit simultanément sur la commande de la machine électrique et sur celle du moteur thermique.

Si le document US-2002/0057582 prévoit une solution pour protéger les organes électriques d'un véhicule hybride, il ne permet pas de superviser dans le même temps le comportement et la stabilité du véhicule entraîné par quatre roues motrices.

Le document US/2003-A1-037977 décrit et représente un dispositif de contrôle et notamment un dispositif contrôle de répartition des efforts dans un véhicule hybride qui comporte un moteur thermique d'entraînement du train avant du véhicule et au moins une machine électrique d'entraînement du train arrière du véhicule.

Le document US/2004-A1-147366 décrit et représente un dispositif de contrôle d'un véhicule hybride qui comporte un moteur thermique d'entraînement du train avant du véhicule et au moins une machine électrique d'entraînement du train arrière du véhicule.

Le document US/2003-A1-132044 décrit et représente un dispositif de contrôle d'un véhicule hybride qui comporte un moteur thermique d'entraînement du train avant du véhicule et au moins une machine électrique d'entraînement du train arrière du véhicule.

Pour remédier aux inconvénients de l'état de la technique, l'invention propose un procédé de contrôle et de supervision d'un véhicule hybride comportant
- un moteur thermique d'entraînement ;
- une machine électrique pouvant sur commande fonctionner en moteur d'entraînement et alimenté par une batterie qui consiste à détecter l'état de fonctionnement (E) du véhicule ; et qui est caractérisé en ce qu'il comporte :
- une étape pour produire en réponse une consigne de fonctionnement de la machine électriques seule, sans exiger aucune commande particulière du moteur thermique ;
- une étape de test pour assurer un respect d'une contrainte de stabilité du véhicule et
- une étape de test pour assurer un respect d'une contrainte de protection des organes électriques du véhicule.

Elle concerne aussi un dispositif de contrôlé et de supervision d'un véhicule hybride comportant :
- un moteur thermique d'entraînement :
- une machine électrique pouvant sur commande fonctionner en moteur d'entraînement et alimentée par une batterie,
   caractérisé en ce qu'il comporte :
- un module de détection d'état de fonctionnement du véhicule hybride qui produit un vecteur d'état de fonctionnement ; et
- un module permettant d'établir unie consigne sur la base du vecteur d'état de fonctionnement, ledit module coopérant avec une unité de contrôle de stabilité du véhicule et une unité de protection électrotechnique des organes électriques du véhicule, 1 ladite consigne étant appliquée à la seule machine électrique du véhicule hybride, et permettent, après avoir détecté l'état de fonctionnement du véhicule, d'effectuer :
   une étape pour produire en réponse une consigne de fonctionnement de la machine électrique seule, sans exiger aucune commande particulière du moteur thermique ;
- une étape de test pour assurer un respect d'une contrainte de stabilité du véhicule ; et
- une étape de test pour assurer un respect d'une contrainte de protection des organes électriques du véhicule.

Selon d'autres caractéristiques de l'invention :
- le procédé de contrôle et de supervision comporte : des étapes de collecte d'informations sur l'état de fonctionnement du moteur thermique, de la machine électrique ainsi que la volonté du conducteur ; une étape pour générer une valeur de pilotage sur la base des informations collectées qui pilote des fonctions de pelotage ; une étape de pilotage de la machine électrique sur la base de fa valeur de pilotage qui exécute une fonction de pilotage en fonction de la volonté du conducteur ; une étape de sécurité qui active, en cas de défaut électrotechnique, une fonction de sécurité imposant un coupe nul à la machine électrique et qui déconnecte la batterie ; une étape de sélection prioritaire qui active en priorité la fonction de sécurité en cas de défaut électrotechnique ; des étapes de commande des organes électriques qui transmet des signaux de commande à la batterie et à la machine électrique sur la base de la fonction sélectionnée à l'étape précédente ;
- le dispositif de contrôle et de supervision comporte : des moyens pour collecter des informations concernant l'état de fonctionnement du moteur thermique et de la machine électrique ainsi que la volonté du conducteur ; des moyens pour interpréter, un fonction des informations collectées par les moyens de collecte, la volonté du conducteur ; des moyens de commande sélectionnant une fonction de pilotage et/ou une fonction de sécurité sur la base de l'interprétation de la volonté du conducteur issue des moyens d'interprétation ; des moyens pour piloter, sur la base de la fonction de pilotage et/ou de sécurité sélectionnée par les moyens de commande, des composants de surveillance des organes électriques tels que la batterie et la machine électrique ; et enfin des moyens de mise en forme des signaux de sortie provenant des moyens de pilotage ;
- le dispositif de contrôle et de supervision comporte trois couches fonctionnelles successive une première couche rassemblant les moyens qui génèrent une variable activant le pilotage une deuxième couche rassemblant les moyens qui exécutent la commande de pilotage sur la base de la valeur de la variable de pilotage ; et une troisième couche rassemblent les: moyens qui exécutent le pilotage des composants de surveillante des organes électriques :
- les moyens de collecter d'informations comportent plusieurs capteurs de nature différente qui relèvent des signaux notamment : sur le contrôle du moteur thermique, la position de la pédale d'accélération, le couple moyen effectif, la position de la pédale de frein, le statut du moteur thermique, etc.; sur les organes électriques du véhicule notamment la vitesse du moteur électrique, les différents défauts de fonctionnement, la température de ta batterie, la tension et le courant de la batterie, la puissance acceptable en charge et en décharge par la batterie et son état de chargé sur la dynamique du véhicule notamment les vitesses des quatre roues, les pressions de freinage des quatre roues, une mesure de l'accélération longitudinale et latérale du véhicule, une mesure d'angle de braquage du votant, une mesure de la vitesse de lacet ; et des signaux tels que les signaux filaires d'arrêt d'urgence, des différents interrupteurs de tableau de bord traduisant la volonté du conducteur, des signaux des détecteurs de défaut d'isolement en provenance de la batterie
- les moyens pour interpréter la volonté du conducteur comportent des moyens pour analyser les informations provenant du moyen de collecte et transmettre en fonction de ces informatisons une variable de pilotage dont la valeur sélectionne une fonction de pilotage ou de sécurité associée dans le moyen de commande suivait
- la variable de pilotage est associée à des moyens pour sélectionner une des fonctions de pilotage et/ou de sécurité dans le moyen de commande dont notamment : une fonction comportant des moyens pour activer le démarrage du véhicule ; une fonction qui rassemble des moyens pour activer la; partie électrotechnique lorsque le conducteur veut démarrer le véhicule, hybride ; une fonction qui rassemble des moyens pour étendre des organes éleclrotechniques à l'arrêt du véhicule ; une fonction qui rassemble des moyens pour placer la machine électrique dans un mode d'attente où le couple électrique est nul, en décélération en mode thermique pur ; une fonction qui rassemble des moyens pour récupérer de l'énergie électrique, en décélération en mode hybride ; une fonction qui rassemble des moyens pour placer la machine électrique en mode d'attente où le couple électrique est nul, en accélération en mode thermique pur; une fonction qui rassemble des moyens pour permettre l'entraînement du véhicule en mode quatre roues motrices, le couple: électrique est proportionnel au couple vilebrequin ou calculé de façon à optimiser la motricité du véhicule, en accélération en mode hybride ;une fonction qui rassemble des moyens pour calculer le couple électrique à partir de la position pédale d'accélération de façon à établir un rampage de type boite de vitesse automatique : un rampage en couple et un rampage en vitesse à partir d'un seuil donné, en mode électrique pur ; et une fonction de sécurité qui rassemble des moyens pour envoyer une, consigne de couple nulle à la machine électrique pour déconnecter le contacteur principal de haute tension afin d'isoler la batterie du reste du véhicule en cas de défaut majeur de fonctionnement de la partie electrotechnique ;
- le moyen de commande comporte un moyen qui limité la valeur de consigne de couple électrique de manière à satisfaire aux critères de stabilité du véhicule;
- les moyens pour piloter les composants de surveillance des organes électriques comprennent des moyens de surveillance de la batterie pour isoler la batterie du reste du véhicule ;
- les moyens pour piloter les composants de surveillance des organes électriques comprennent un moyen de pilotage de la machine électrique qui comprend des moyens pour transmettre à la machine électrique une consigne de couple adaptée aux limitations de fonctionnement des organes électriques et à la stabilité véhicule.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique d'un véhicule hybride dans lequel est installé un dispositif de supervision selon un mode particulier de l'invention ;
- la figure 2 est un schéma bloc représentant l'architecture de contrôle du dispositif de supervision selon un mode particulier de l'invention
- la figure 3 est un schéma bloc d'une partie de l'architecture de contrôle de la figure 2 ;
- la figure 4 est un schéma bloc d'une autre partie de l'architecture de contrôle de la figure 2 :
- la figure 5 est un schéma détaillant les étapes du procédé de supervision et de contrôle selon l'invention.
- la figure 6 est un schéma bloc d'un dispositif de supervision d'un véhicule hybride dans un mode particulier de réalisation.
- la figure 7 est un organigramme d'un logiciel mettant en oeuvre le procédé de supervision et de contrôle du véhicule hybride de l'invention.

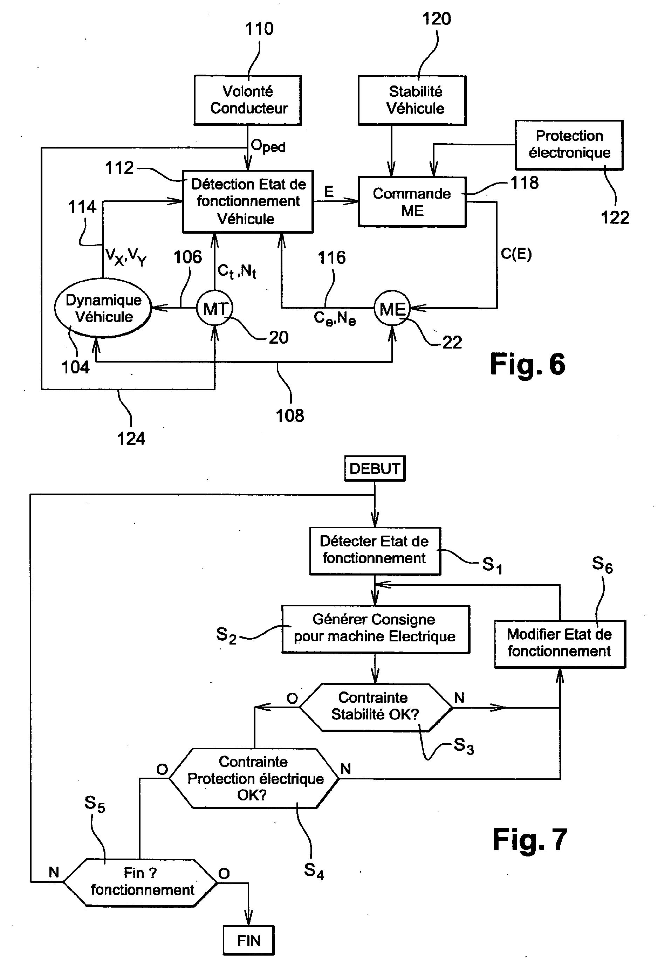

A la figure 6, on a représenté un mode particulier de réalisation d'un dispositif de supervision d'un véhicule hybride selon l'invention.

Le véhicule hybride est modélisé par une plateforme dynamique 104 qui est entraînée à l'aide d'un lien mécanique 106 par un moteur thermique 20 et à l'aide d'un lien mécanique 108 par une machine électrique 22.

La machine électrique 22 pouvant être réversible en génératrice électrique ou en moteur électrique, le lien mécanique 108 est bidirectionnel.

La plateforme dynamique 104 du véhicule est équipée d'une pluralité de capteurs de la stabilité ou de l'état de stabilité du véhicule qui produisent des signaux représentatifs des paramètres d'état de fonctionnement du véhicule comme différentes vitesses et accélérations linéaires et angulaires relativement à différents axes de référence du véhicule ainsi qu'il est déjà connu. Les données de ces capteurs sont transmises par un lie 114 à un module 112 de détection d'état de fonctionnement du véhicule hybride.

Le module 112 de détection d'état de fonctionnement du véhicule hybride est aussi relié par un lien 114 à des capteurs de l'état de fonctionnement du moteur thermique 20, notamment par estimation ou mesure ou calcul du couple thermique et et du régime thermique Nt.

Le module 112 de détection de l'état de fonctionnement du véhicule hybride est aussi relié par un lien 116 à des capteurs de l'état de fonctionnement de la machine électrique 22, notamment par estimation ou mesure ou calcul des paramètres de couple électrique Ce, qui peut être positif si la machine électrique fonctionne en moteur, ou négatif si elle travaille en génératrice, ainsi que son régime ou vitesse de rotation Ne.

Par ailleurs, le poste de pilotage 110 du véhicule est doté de moyens de détection de la volonté du conducteur, comme par exemple un capteur d'angle de pédale θped d'appui sur la pédale d'accélérateur, un capteur d'angle de braquage du volant, un capteur d'accélération du véhicule, qui permettent notamment par un lien direct 124 de régler par exemple le degré d'ouverture du papillon d'admission des gaz dans le moteur thermique 20.

Par ailleurs, un tel paramètre de volonté du conducteur 0ped est aussi appliqué au module 112 de détection de l'état de fonctionnement de l'état du véhicule.

Le module 112 de détection de l'état de fonctionnement, produit un signal instantané comportant une liste des différents paramètres précités qui décrivant l'état de fonctionnement du véhicule et qui est transmis à l'entrée d'un second module 118 permettant d'établir une consigne ou une commande de la seul machine électriques 22 pour superviser ou contrôler l'attitude de l'ensemble du véhicule hybride.

Le module 118, à cet effet, est connecté respectivement à une unité de contrôle de stabilité du véhicule 120 et à une unité de protection électrotechnique 122 des organes électriques du véhicule.

Sur la base à la fois du signal d'état de fonctionnement E de l'état de stabilité issu du module 120 de l'état de protection 122, le second module 118 produit un signal de commande de la seule machine électrique C(E) qui est appliqué à un circuit de commande de la machine électrique 22 tout en respectant à la fois la stabilité du véhicules, l'intention du conducteur et la protection électrotechnique des organes électriques du véhicule.

A cet effet, bien que cela n'ait pas été porté à la figure 6, la machine électrique 22 coopère avec un circuit de pilotage qui est électriquement alimenté par une batterie électrochimique.

Le circuit de pilotage est habituellement composé d'un pont en H dont les interrupteurs sont pilotés en modulation en largeur d'impulsion du circuit de pilotage de la machine électrique de façon à faire varier la puissance électrique échangée entre la machine électrique, d'une part, et la batterie, d'autre part,

Le signal de commande C(E) permet de faire varier notamment le taux de modulation en largeur d'impulsion de façon à contrôler le comportement dynamique du véhicule tout en respectant les critères de protection électrotechnique pris en compte par le module 122 ainsi que les contraintes de stabilité du véhicule pris en compte par le module 120. On notera que cette architecture de contrôle est réalisée en contrôlant le fonctionnement de la seule machine électrique 22 quelle que soit la commande appliquée ou non au moteur thermique 20.

Particulièrement, si le moteur thermique, 20 produit une puissance trop importante, celle-ci peut être partiellement dérivée par la consigne C(E) qui détermine un mode génératrice de la machine électrique 22.

Inversement, si la stabilité du véhicule est compromisse d'après le module 120 d'analyse de la contraintes de stabilité, le signal C(E) Induit un fonctionnement de la machine électrique 22 en moteur de sorte que la stabilité soit rattrapée.

On remarque que cette architecture permet de résoudre des contraintes de stabilité du véhicule et de protection électrotechnique qui ont été décrites et qui seront définies plus avant dans le corps du texte de manière simplifiée sans avoir à travailler sur le moteur thermique.

A la figure 7, on a représenté un organigramme du procédé de supervision de l'invention, notamment quand ce procédé est implémenté sous la forme d'un logiciel dans un calculateur de véhicule.

Après une étape de début qui peut être lancée par la manoeuvre de la clef de contact demandant la mise en fonctionnement du véhicule, on exécute, lors d'une étape S1, la détection de l'état de fonctionnent E du véhicule.

Cette étape permet de collecter, par exemple à des instants prédéterminés les différents paramètres précités représentatifs de l'état de fonctionnement du véhicule ainsi qu'on l'a décrit à l'aide de la figure 6,

A l'issue de cette étape, les données représentatives de l'état de fonctionnement du véhicule sont prisés en compte lors d'une étape S2 pour générer une consigne de fonctionnement C(E) de la machine électrique 22 seule.

Cette consigne électrique n'exige pas qu'une commande particulière soit appliquée au moteur thermique 20.

Elle est exécutée en assurant le respect d'une contrainte de stabilité du véhicule et d'une contrainte de protection de la machine électrique 22, ainsi qu'il a déjà été décrit à l'aide du dispositif de la figure 6,

A cet effet, une fois un premier niveau de consigne produit à l'issue de l'étape S2, on exécute lors d'un test S3 si la contrainte de stabilité du véhicule est respectée.

Dans le cas positif, on exécute, lors d'une étape S4, le test de respect de la contrainte de la protection électrolechnique des organes électriques du véhicule.

Si l'étape S4 est positive, lors d'une étape 55, on teste l'indication d'une fin de fonctionnement du véhicule.

Si l'étape S5 est négative, le contrôle retourne à l'étape S₁ de détection d'état de fonctionnement du véhicule et la boucle se poursuit.

Par contre, la boucle est interrompue si l'étape S5 est positive et à ce moment là, on exécute une étape de fin qui permet de mettre le véhicule un étant d'arrêt de fonctionnement.

Si les étapes S3 et/ou S4 de test des contraintes sont négatives, on réalise, lors d'une étape S6 une modification de paramètres modifiable de la fonction d'établissement de la consigne C(E) de la machine électriques 22 de façon à générer une consigne permettant de respecter les contraintes S3 et S4, et la boucle reprend à l'étape S2.

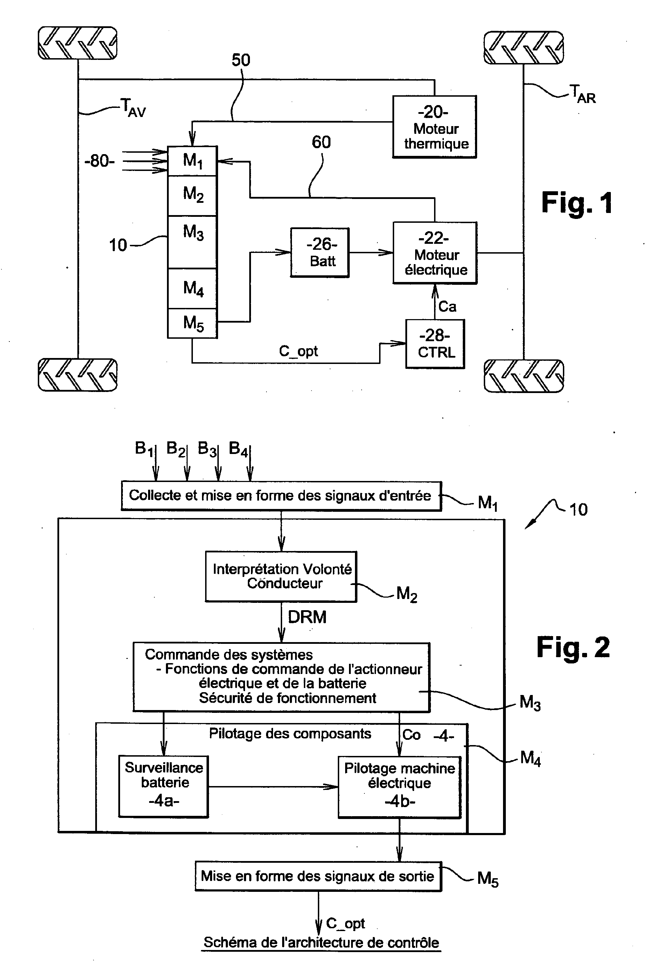

Le véhicule hybride, représentés dans un mode particulier de réalisation de l'invention à la figure 1, comporte un moteur thermique 20, mécaniquement couplé aux roues motrices du train avant Tav du véhicule. Une batterie 26 est elle-même connectée via une machine électrique 22 entraînant le train arrière Tar du véhicule. La machine électrique 22 est commandée par un contrôleur 28 qui reçoit une consigne de fonctionnement, via le dispositif de supervision 10 mettant en oeuvre le procédé de l'invention, comme une consigne de couple et/ou une consigne de régime. Le contrôleur 28 élabore, sur la base des consignes, une commande de couple et/ou de régime Ca qui est prise en compte par à machine électrique 22 connectée à la batterie 26.

Le moteur thermique 20, lui-même connecté, à un contrôleur (non représenté), distinct ou non du contrôler 28, permet ainsi d'entraîner le véhicule dans le cas où l'état de charge de la batterie 26 alimentant le moteur électrique 22 est faible, ou encore de recharger la batterie 26 en faisant travailleur la machine électrique 22 en mode génératrice ou une autre machine (non représentée) fonctionnant en génératrice.

La batterie 26 comporte une pluralité de cellules (non représentées) électriquement connectées de façon à produire ou recevoir l'énergie électrique sous des tensions et intensités prédéterminées.

Le véhicule comporte enfin un dispositif de contrôle et de supervision 10 qui est connecté -50, 60- au moteur thermique 20, à la machine électrique 22 et 80 à des capteurs (non représentés) et qui transmet au contrôleur 28 des consignes de commandes de la machine électrique 22 et des consignes de commande à la batterie 26.

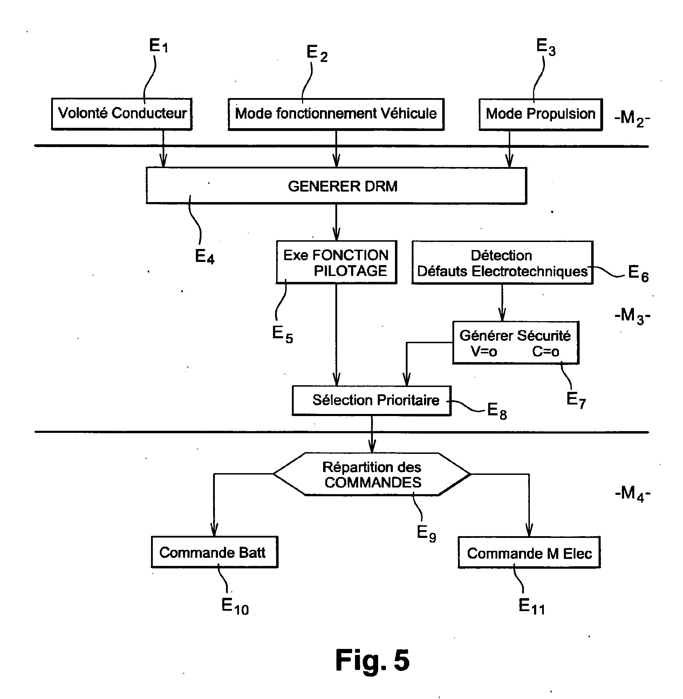

A la figure 5, on a représenté la séquence des étapes exécutées par le procédé de supervision et de contrôle de invention.

Le procédé de l'invention exécute trois premières étapes de commande en parallèle,

Le procédé de l'invention exécute une première étape E1 au cours de laquelle un signal de détection de la volonté du conducteur est calculé à partir de signaux tels que des signaux filaires d'arrêt d'urgence, des différents interrupteurs de tableau de bord indiquant la volonté du conducteur.

Il exécute en parallèle une étape E2 au cours de laquelle vont être collectées des informations concernant le mode de fonctionnement du véhicule hybride, notamment l'état de fonctionnement du moteur électrique 22.

Le procédé de l'invention exécute une troisième étape E3 de détection du mode de propulsion du véhicule hybride au cours de laquelle vont être collectées des informations sur le régime du véhicule fonctionnant soit en mode thermique pur, soit en mode électrique pur, soit en mode hybride, et des informations sur la dynamique des quatre roues du véhicule.

Une fois ces informations collectées, le contrôleur passe à une étape E4 de génération d'une variable de pilotage DRM. La variable de pilotage DRM peut prendre plusieurs valeurs qui commandent chacune l'exécution d'une fonction de pilotage d'un mode de propulsion, et d'un mode de fonctionnement choisis par le conducteur et interprétés au cours des étapes précédentes E1, E2 et E3.

Une étape E5 du procédé de l'invention consiste en la commande d'exécution de la fonction de pilotage associée à la valeur de la variable DRM générée à l'étape précédente E4.

En parallèle, le procédé de l'invention exécute une étape E6 de détection des défauts électrotechniques, comme par exemple une surcharge anormale de la batterie 26 ou bien un défaut de masse de la machine électrique, a partir des informations sur les défauts de fonctionnement de la batterie 26 et de la machine électrique 22 transitant par un bus de communication.

Si une anomalie électrotechnique est détectée, une fonction de sécurité est activée dans l'étape suivante E7 de génération de sécurité, Cette fonction de sécurité impose un couplé nul à la machine électrique 22 et une tension nulle à la batterie 26 afin d'éviter une éventuelle détérioration de ces organes électriques.

Une étape de sélection prioritaire E8 reçoit en entrée les vecteurs d'informations de l'étape d'exécution de la fonction de pilotage E5 et de l'étape de génération de sécurité E7. Si une anomalie électrotechnique a été détectée l'étape E6, alors l'étape E8 transmet en priorité la commande d'exécution de la fonction de sécurité pour protéger les organes électriques, quelle que soit la fonction de pilotage activée à l'étape E5. Si la fonction de sécurité n'a pas été activée, alors l'étape E8 transmet la commande d'exécution de la fonction de pilotage sélectionnée.

L'étape de répartition des commandes E9 reçoit la commande d'exécution de l'étape précédente E8 et répartit les commandes de couples et de tensions respectivement à l'étape E11 de commande de la machine électrique 22 et à l'étape E10 de commande de la batterie 26.

Dans un mode particulier de réalisation de l'invention, le dispositif de supervision, représenté plus en détail à la figure 2, présente une architecture à trois couches fonctionnelles successives. Il comporte:
- des moyens M1 pour collecter des informations concernant l'état de fonctionnement du moteur thermique 20 et de la machine électrique 22 ainsi que la volonté du conducteur ; et des moyens M5 de mise en forme des signaux de sortie.
- des moyens M2, constituant une première couche fonctionnelle, pour interpréter, en fonction des informations collectées par les moyens de collecte M1, la volonté du conducteur ;
- des moyens de commande M3, constituant une deuxième couche fonctionnelle, sélectionnant une fonction de pilotage et/ou une fonction de sécurité sur la base de l'interprétation de la volonté du conducteur issue des moyens d'interprétation M2 ;
- des moyens M4, constituant une troisième couche fonctionnelle, pour piloter, sur la base de la fonction de pilotage et/ou de sécurité sélectionnée par les moyens de commande M3, les composants de surveillance des organes électriques tels que la batterie 26 et la machine électrique 22.

Le rôle du moyen de collecte d'informations M1 est de sélectionner les signaux nécessaire pour le contrôle. Les signaux ainsi sélectionnés sont traités, c'est-à-dire remis à l'échelle ou filtrés. Ces signaux proviennent de différents bus de communication B1, B2, B3 et B4, représentés à la figure 2, qui collettent notamment des informations sur le moteur thermique 20, la machine électrique 22, la dynamique de véhicule, la volonté du conducteur, les signaux relatifs aux commandes du tableau de bord, etc.

Le moyen M2 pour interpréter en fonction des informations collectées par les moyens de collecte M1 comporte des moyens pour analyser les signaux transitant par les bus B1, B2, B3 et B4 et mis en forme par le moyen de collecte M1 et des moyens pour générer en fonction de ces informations une variable de pilotage DRM dont la valeur est associée à une fonction pilotage ou une fonction de sécurité.

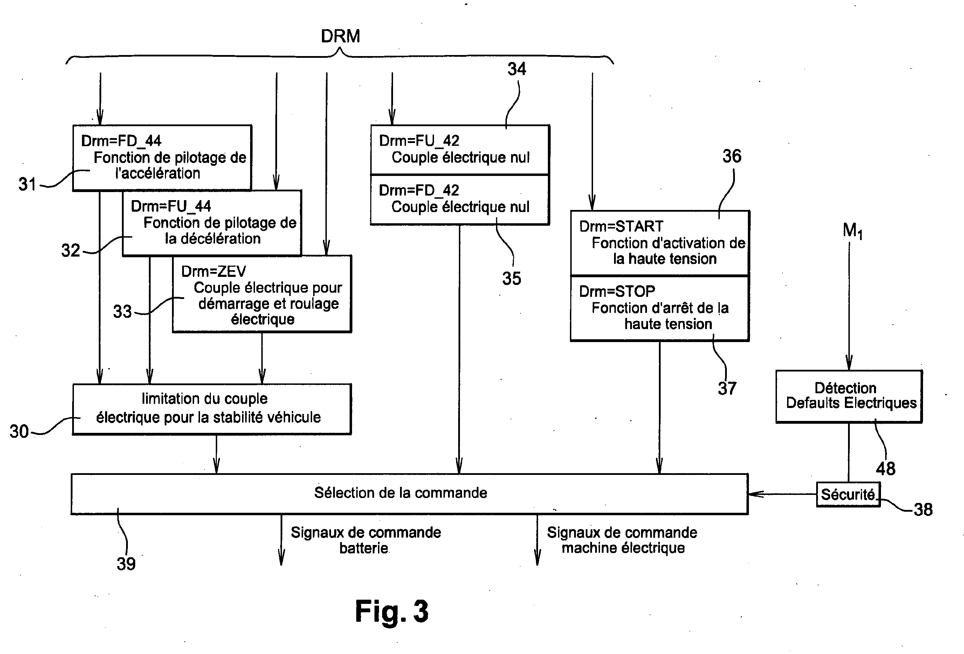

Il existe différentes fonctions de pilotage, représentées schématiquement à la figure 3, correspondant à différents modes de roulage du véhicule, par exemple le mode thermique où seul le moteur thermique 20 entraîne le véhicule, le mode électrique pur ou le mode hybride. Ces fonctions de pilotage sont activées par des moyens qui calculent des consignes en vue de commander les organes électriques en fonction de la volonté du conducteur, mais aussi des conditions de stabilité du véhicule et de la protection des organes électriques.

La fonction de sécurité est activée lors d'un défaut majeur sur un organe électrique, par des moyens qui transmettent une consigne de couple électrique nulle et déconnecte la batterie 26 du reste du circuit électrique.

Le moyen M3 de commande de l'actionneur électrique reçoit en entrée la variable de pilotage DRM issue des moyens d'interprétation M2 permettant de sélectionner la fonction de pilotage et/ou la fonction de sécurité correspondante à la valeur de la variable DRM et détermine une consigne de couple de commande Co transmise au moyen de pilotage M4.

Les moyens M4 pour piloter les composants de surveillance des organes électriques, notamment la batterie 26 et la machine électrique 22 comportent deux sous-blocs, représentés à la figure 2.

Le premier sous-bloc 4a est un moyen de surveillance de la batterie 26 et comporte des moyens pour actionner un contacteur (non représenté) isolant la batterie 26 du reste du véhicule de manière éviter toute détérioration.

Le second sous-bloc 4b constitue un moyen de pilotage de la machine électrique 22 qui reçoit en entrée la consigne de couple électrique Co demandé par l'une des fonctions de commande du moyen de commande des systèmes M3 et la commande du contacteur provenant du sous-bloc 4a. Le sous-bloc 4b comporte aussi des moyens pour calculer une consigne de couple C_opt adaptée aux limitations de fonctionnements des organes électriques liées à la stabilité du véhicule et à l'état de la batterie 26.

Enfin le moyen M5 met en forme, c'est-à-dire remet à l'échelle et/ou filtre, les signaux de sortie provenant du moyen de pilotage M4 et les transmet au contrôleur 28 de la machine électrique 22.

Dans un mode particulier de réalisation, le moyen M1 de collecte d'informations comporte plusieurs capteurs qui relèvent:
- des informations, transitant par le bus B1, décrivant l'état du contrôle du moteur thermique 20, notamment, la position de la pédale d'accélération du véhicule, le couple moyen effectif (estimation du couple vilebrequin), la position de la pédale de frein, le statut du moteur thermique ;
- des informations, transitant par le bus B2, sur les organes électriques du véhicule notamment la vitesse de rotation d'un rotor (non représenté) généralement couplé au moteur électrique 22, les différents défauts de fonctionnement, la température de la batterie 26, la tension et le courant de la Batterie 26, la puissance acceptable en charge et en décharge par la batterie 26, l'état de charge de celle-ci;
- des informations, transitant par le bus B3, concernant la dynamique du véhicule notamment les vitesses des quatre roues, les pressions de freinage des quatre roues, une mesure de l'accélération longitudinale du véhicule;
- et des signaux, transitant par le bus B4, tels que les signaux filaires d'arrêt d'urgence, des différents interrupteurs de tableau de bord indiquant la volonté du conducteur, des signaux des détecteurs de défaut en provenance de la batterie 26.

Les informations ainsi collectées sont interprétées par le moyen M2. Le moyen M2 comporte des moyens pour analyser les informations collectées par le moyen M1 et des moyens pour transmettre en fonction de ces informations une variable DRM dont la valeur actionne une fonction associée de pilotage ou de sécurité.

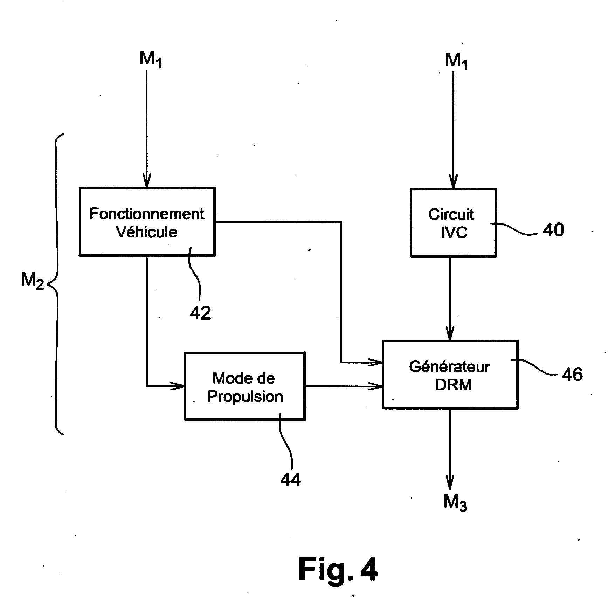

A la figure 4, on a représenté un schéma bloc du circuit du moyen M2 d'interprétation de la volonté du conducteur selon un mode de réalisation de l'invention et qui débouche sur la génération d'une valeur de variable de pilotage DRM.

Le moyen M2 comporte un circuit IVC d'interprétation de la volonté conducteur 40, qui met en oeuvre l'étape E1 du procédé de l'invention. Le circuit IVC 40 reçoit du moyen M1 les informations sur la volonté du conducteur traduite notamment par la position des pédales, des signaux de commande provenant du tableau de bord, etc. Une fois la volonté du conducteur analysé, elle est transmise au circuit 46 générateur de la variable de pilotage DRM, afin de commander l'exécution de la fonction de pilotage adéquate.

Le moyen M2 comporte un circuit 42 qui met en oeuvre l'étape E2 du procédé de l'invention pour déterminer le mode de fonctionnement de véhicule. Le bloc de détection du fonctionnement du véhicule 42 détecte, à partir des informations provenant des moyens M1, si les moteurs électrique 22 et thermique 20 sont à l'arrêt ou en marche et envoie un signal approprié au circuit 46 générateur de la variable de pilotage DRM.

Le moyen M2 comporte un circuit 44 qui met en oeuvre l'étape E3 du procédé de l'invention pour détecter le mode de propulsion du véhicule. Le bloc 44 détecte le mode de propulsion du véhicule à partir du signal transmis par le bloc 42 de détection de fonctionnement du véhicule, pour déterminer si le véhicule doit rouler en mode thermique pur, électrique pur ou bien en mode hybride.

Le moyen M2 d'interprétation de la volonté conducteur comporte enfin un générateur de variable de pilotage DRM 46, recevant les signaux des circuits 40, 42 et 44 décrits précédemment pour établir une valeur de pilotage DRM associée à une fonction de pilotage adaptée à la volonté d u conducteur.

La variable DRM commande des moyens pour sélectionner une des fonctions de pilotage ou de sécurité. Plus précisément, la variable DRM a pour but d'activer une fonction de pilotage ou une fonction de sécurité dans l'étape de commande suivante. La variable DRM peut prendre différentes valeurs dont notamment :
- la valeur SBY pour activer le démarrage du véhicule ;
- la valeur START lorsque le conducteur veut démarrer le véhicule hybride ;
- la valeur STOP à l'arrêt du véhicule ;
- la valeur FU_42 en décélération lorsque le conducteur choisit de rouler en mode thermique pur ;
- la valeur FU_44 en décélération lorsque le conducteur choisit de rouler en mode hybride ;
- la valeur FD_42 en accélération lorsque le conducteur choisit de rouler en mode thermique pur ;
- la valeur FD_44 en accélération lorsque le conducteur choisit de rouler en mode hybride ;
- la valeur ZEV en mode électrique pur.

Chacune de ces valeurs de DRM est associée à une fonction de pilotage qui est activée grâce au moyen de commande M3, représenté plus en détails à la figure 3.

Ces fonctions regroupent des moyens de pilotage des actionneurs électriques qui sont activés ou non selon la volonté du conducteur et des moyens pour prendre en compte les paramètres de sécurité des organes électriques.

On distingue deux catégories de fonctions, illustrées à la figure 3; celles de pilotage commandées par la valeur de la variable DRM et celle de sécurité.

Lorsque DRM envoie la valeur SBY, une fonction de pilotage est activée par des moyens pour démarrer du véhicule.

Lorsque DRM envoie la valeur STAR, un bloc 36 exécute une fonction de pilotage qui met en oeuvre des moyens pour activer la partie électrotechnique haute tension lorsque le conducteur veut démarrer le véhicule en mode hybride.

Lorsque DRM envoie la valeur STOP, un bloc 37 exécute une fonction de pilotage qui met en oeuvre des moyens pour éteindre les organes électrotechniques à l'arrêt du véhicule.

Lorsque DRM envoie la valeur FU_42, en décélération en mode thermique pur, un bloc 34 exécute une fonction de pilotage qui met en oeuvre des moyens pour placer la machine électrique 22 en atteinte, c'est-à-dire lui imposer une consigne de couple électrique nulle.

Lorsque DRM envoie la valeur FD_42 en accélération en mode thermique pur, un bloc 35 exécute une fonction de pilotage qui met en oeuvre des moyens pour placer la machine électrique 22 en attente, c'est-à-dire lui imposer une consigne de couple électrique nulle.

Les consignes de commandes issues de l'exécution des fonctions de pilotages précédentes sont transmises à un bloc de sélection de commande 39 qui transmet les signaux de commande de la batterie 26 à l'organe de surveillance de la batterie 4a du moyen M4 et les signaux de commande de la machine électrique 22 à l'organe de pilotage de la machine électrique 4b du moyen M4.

Lorsque DRM envoie la valeur FD_44, en accélération en mode hybride, un bloc 31 exécute une fonction de pilotage qui met en oeuvre des moyens pour propulser le véhicule en mode quatre roues motrices où le couple électrique, non nul, est proportionnel au couple vilebrequin ou bien calculé de façon à optimiser la motricité du véhicule et la liaison au sol ;

Lorsque DRM envoie la valeur FU_44, un bloc 32 exécute une fonction de pilotage qui met en oeuvre des moyens pour récupérer de l'énergie électrique en décélération du véhicule en mode hybride en faisant fonctionner la machine électrique 22 en mode générateur afin notamment de recharger la Batterie 26;

Lorsque DRM envoie la valeur ZEV en mode électrique pur, un bloc 33 exécute une fonction de pilotage qui active des moyens pour calculer le couple électrique à partir de la position pédale d'accélération du véhicule de façon à établir un rampage de type boite de vitesse automatique: un rampage en couple lors du démarrage du véhicule et un rampage en vitesse à partir d'un seuil donné, généralement lorsque le véhicule roule.

Pour ces trois dernières fonctions, la valeur de couple électrique transmise est non nulle. La valeur de la consigne de couple calculée par ces fonctions est limitée par le bloc de limitation 30 de manière à satisfaire les conditions de stabilité et de liaison au sol du véhicule hybride roulant en mode quatre roues motrices, c'est-à-dire de vérifier la répartition du couple d'entraînement à chacun des trains du véhicule.

La fonction de sécurité est exécutée par le bloc de sécurité 38 relié au bloc de détection de défauts électriques 48. Le bloc de détection des défauts électriques 48 reçoit en entrée les informations relatives au fonctionnement de la batterie 26 depuis le moyen d'informations M1 et détecte d'éventuelles anomalies de fonctionnement.

Si un défaut électrique est détecté, un signal est transmis au bloc de sécurité 38 activant la fonction de sécurité de manière à envoyer une consigne de couple nulle à la machine électrique 22 et une tension nulle à la batterie 26 isolant électriquement la batterie 26 du reste du véhicule pour empêcher toute détérioration des organes électriques. Cette fonction de sécurité est activée en cas de défaut majeur de fonctionnement de la partie électrotechnique, comme par exemple lorsque la tension de la batterie 26 n'est plus dans un intervalle de sécurité prédéterminé.

La fonction de sécurité est prioritaire par rapport aux autres fonctions de pilotage ce qui veut dire que toute fonction de pilotage est suspendue lors de l'exécution de la fonction, de sécurité.

La fonction de sécurité transmet alors les consignes au bloc de sélection de commande 39 qui transmet prioritairement les consignes de sécurité.

Les moyens M4 pour piloter les composants de surveillance des organes électriques, notamment la batterie 26 et la machine électrique 22 comportent deux sous-blocs, représentés à la figure 2:
- le premier sous-bloc 4a représente un moyen de surveillance de la batterie 26;
- le second sous-bloc 4b représente un moyen de pilotage de la machine électrique 22.

Le premier sous-bloc 4a comprend des moyens pour actionner un contacteur (non représenté) isolant les organes électriques du reste du véhicule de manière éviter tout détérioration.

Le second sous-bloc 4b constitue un moyen de pilotage de la machine électrique 22 reçoit en entrée la consigne de couple électrique Co demandé par l'une des fonctions de commande du moyen de commande des systèmes M3 et la commande du contacteur provenant du sous-bloc 4a. Le sous-bloc 4b comporte aussi des moyens pour calculer une consigne de couple adaptée aux limitations de fonctionnements des organes électriques.

Enfin le moyen M5 met en forme les signaux de sortie provenant du moyen de pilotage M4 et les transmet au contrôleur 28 pour commander la machine électrique 22 et à la batterie 26.

## Revendications

1. Procédé de contrôle et de supervision d'un véhicule hybride comportent
- une moteur thermique d'entraînement (20);
- une machine électriques (22) pouvant sur commande fonctionner en moteur d'entraînement et alimenté par une batterie (26) qui consiste à détecter (S1) l'état de fonctionnement (E) du véhicule;
et qui est **caractérisé en ce qu'**il comporte:
- une étape (S2) pour produire en réponse une consigne de fonctionnement (C(E)) de la machine électrique (22) seule, sans exiger aucune commande particulière du moteur thermique (20):
- une étape de test (S3) pour assurer un respect d'une contrainte de stabilité du véhicule; et
- une étape de test (S4) pour assurer un respect d'une contrainte de protection des organes électriques du véhicule.

2. Procédé de contrôle et de supervision selon la revendication 1, **caractérisé en ce qu'**il comporte:
- des étapes de collecte d'informations (E1, E2, E3) sur l'état de fonctionnement du moteur thermique (20), de l'actionneur électrique (22) ainsi que la volonté du conducteur;
- une étape (E4) pour générer une valeur de pilotage (DRM) sur la base des informations collectées qui pilote des fonctions de pilotage;
- une étape de pilotage (E5) de l'actionneur électrique (22) sur la base de la valeur de pilotage (DRM) qui exécute une fonction de pilotage en fonction de la volonté du conducteur;
- une étape de sécurité (E6, E7) qui active, en cas de défaut électrotechnique, une fonction de sécurité imposant un couple nul à la machine électrique (22) et qui déconnecte la batterie (26);
- une étape; de sélection prioritaire (E8) qui active en priorité la fonction de sécurité en cas de défaut électrotechnique;
- des s étapes de commande (E9, E10) des organes électriques qui transmet des signaux de commande à la batterie (26) et à la machine électrique (22) sur la base de la fonctions sélectionnée à l'étape précédente.

3. Dispositif de contrôle et de supervision d'un véhicule hybride comportant :
- un moteur thermique d'entraînement (20) ;
- une machine électrique (22) pouvant sur commande fonctionner en moteur d'entraînement et alimentée par une batterie (26),
**caractérisé en ce qu'**il comporte:
- un module (112) de détection d'état de fonctionnement du véhicule hybride qui produit un vecteur (E) d'état de fonctionnement ; et
- un module (118) permettant d'établir une consigne (C(E)) sur la base du vecteur d'état de fonctionnement (E), ledit module (118) coopérant avec une unité de contrôle de stabilité du véhicule (120) et une unité de protection électrotechnique (122) des organes électriques du véhicule, ladite consigne (C(E)) étant appliquée à la seule machine électrique (22) du véhicule hybride, et permettant, après avoir détecté (S1) l'état de fonctionnement (E) du véhicule, d'effectuer ;
- une étape (S2) pour produire en réponse une consigne de fonctionnement (C(E)) de la machine électrique (22) seule, sans exiger aucune commande particulière du moteur thermique (20) ;
- une étape de test (S3) pour assurer un respect d'une contrainte de stabilité du véhicule ; et
- une étape de test (S4) pour assurer un respect d'une contrainte de protection des organes électrique du véhicule.

4. Dispositif (10) de contrôle et de supervision selon la revendication 3, **caractérisé en ce qu'**il comporte :
- des moyens (M1) pour collecter des informations concernant l'état de fonctionnement du moteur thermique et de la machine électrique (22) ainsi que la volonté du conducteur ;
- des moyens (M2) pour interpréter, en fonction des informations collectées par les moyens de collecte. (M1), la volonté du conducteur :
- des moyens de commande (M3) sélectionnant une fonction de pilotage et/ou une fonction de sécurité sur la base de l'interprétation de, la volonté du conducteur issue des moyens d'interprétation (M2) ;
- des moyens (M4) pour piloter, sur la base de la fonction de pilotage et/ou de sécurité sélectionnée par les moyens de commande (M3), des composants de surveillance des organes électriques tels que la batterie (26) et la machine électrique (22) ;
- et enfin des moyens (M5) de mise en forme des signaux de sortie provenant du moyen de pilotage (M4).

5. Dispositif (10) de contrôle et de supervision selon la revendication 4, **caractérisé en qu'**il comporte trois couches fonctionnelles successive
- urne première couche rassemblant les moyens (M1, M2) qui génèrent une variable (DRM) activant le picotage
- une deuxième couche rassemblant les moyens (M3) qui exécutent la commande de pilotage sur, la base de la valeur de la variable de pilotage (DRM) ;
- une troisième couche rassemblant les moyens (M4) qui exécutent le pilotage des composants de surveillance des organes électriques.

6. Dispositif de contrôlé et de supervision (10) d'un véhicule hybride selon la revendication 5, **caractérisé en ce que** les moyens de collecte d'informations (M1) comportent plusieurs capteurs de nature différente qui relèvent des signaux notamment :
- sur le contrôle du moteur thermique (20), la position de la pédale d'accélération, le couple moyen effectif, la position de la pédale de frein, le statut du moteur thermique (20), etc;
- sur les organes électriques du véhicule notamment la vitesse du moteur électrique (22), les différents défauts de fonctionnement, la température de la batterie (26), la tension et le courant de la batterie (26), la puissance acceptable en charge et en décharge par la Batterie (26) et son état de charge ;
- sur la dynamique du véhicule notamment les vitesses des quatre roues, les pressions de freinage des quatre roues, une mesure de l'accélération longitudinale et latérale du véhicule, une mesure d'angle de braquage du volant, une mesure de la vitesse de lacet ; et des signaux tels que les signaux filaires d'arrêt d'urgence, des différents interrupteurs de tableau de bord traduisant la volonté du conducteur, des signaux des détecteurs de défaut d'isolement en provenance de la batterie (26).

7. Dispositif de contrôle et de supervision (10) d'un véhicule hybride selon la revendication 6, **caractérisé en ce que** les moyens (M2) pour interpréter la volonté du conducteur comportent des moyens pour analyser les informations provenant du moyen de collecte (M1) et transmettre en fonction de ces informations une variable (DRM) dont la valeur sélectionne une fonction de pilotage ou de sécurité associée dans le moyen de commande suivant (M3).

8. Dispositif de contrôle et de supervision (10) d'un véhicule hybride selon la revendication 7, **caractérisé en ce que** la variable (DRM) est associée à des moyens pour sélectionner une des fonctions de pilotage et/ou de sécurité dans le moyen de commande (M3) dont notamment :
- une fonction comportant des moyens pour activer le démarrage du véhicule (SBY);
- une fonction qui rassemble des moyens pour activer la partie' électrotechnique lorsque le conducteur veut démarrer le véhicule hybride (START) ;
- une fonction qui rassemble des moyens pour éteindre des organes électrotechniques à l'arrêt du véhicule (STOP) ;
- une fonction qui rassemble des moyens pour placer la machine électrique (22) dans un: mode d'attente où le couple électrique est nul, en décélération en mode thermique pur (FU_42):
- une fonction qui rassemble des moyens pour récupérer de l'énergie électrique, en décélération en mode hybride (FU_44) ;
- une fonction qui rassemble des moyens pour placer l'actionneur électrique en mode d'attente où le couple électrique est nul, en accélération en mode thermique pur (FD_42) ;
une fonction qui rassemble des moyens pour permettre l'entraînement du véhicule en mode 4 roues motrices, le couple électrique est proportionnel au copie vilebrequin ou calculé de façon à optimiser la motricité du véhicule, en accélération en mode hybride (FD_44) ;
- une fonction qui rassemble des moyens pour calculer le couple électrique à partir de la posit1on pédale d'accélération de façon à établir un rampage de type boite de vitesse automatique : un rampage en couple et un rampage en vitesse à partir d'un seuil donné, en mode électrique pur (ZEV) ;
- et une fonction de sécurité qui rassemble des moyens pour r envoyer une cosigne de couple nulle à la machine électrique et pour déconnecter le contacteur principal de haute tension afin d'isoler la batterie (26) du reste du véhicule en cas de défaut majeur de fonctionnement de la partie électrotechnique.

9. Dispositif de contrôle et de supervision (10) d'un véhicule hybride selon la revendication 8 **caractérisé en ce que** le moyen M3 comporte un moyen (30) qui limite la valeur de consigne de couple électrique de manière à satisfaire aux critères de stabilité du véhicule.

10. Dispositif de contrôle et de supervision (10) d'un véhicule hybride selon la revendication 9, **caractérisé en ce que** les moyens (M4) pour piloter les composants de surveillance des organes électriques comprennent des moyens de surveillance de la batterie (bloc 4a) pour isoler la batterie (26) du reste du véhicule.

11. Dispositif de contrôle et de supervision (10) d'un véhicule hybride selon la revendication 10, **caractérisé en ce que** les moyens (M4) pour piloter les composants de surveillance des organes électriques comprennent un moyen de pilotage (bloc 4b) de la machine électrique (22) qui comprend des moyens pour transmettre à la machine électrique une consigne de couple (C_opt) adaptée aux limitations de fonctionnement des organes électriques et à la stabilité véhicule.

## Claims

1. Method for controlling and supervising a hybrid vehicle comprising
- a driving engine (20);
- an electric machine (22) able on command to operate as driving motor and supplied by a battery (26),
which consists in detecting (S1) the operating state (E) of the vehicle;
and **characterized in that** it comprises:
- a step (S2) for producing in response an operating setting (C(E)) for the electric machine (22) only, without demanding any particular control of the engine (20);
- a testing step (S3) to ensure compliance with a stability constraint for the vehicle; and
- a testing step (S4) to ensure compliance with a protection constraint for the electrical items of the vehicle.

2. Method of control and supervision according to Claim 1, **characterized in that** it comprises:
- steps of collecting information (E1, E2, E3) on the operating state of the engine (20), of the electric actuator (22) as well as the driver's desire;
- a step (E4) of generating a command value (DRM) on the basis of the information collected which commands command functions;
- a step (E5) of commanding the electric actuator (22) on the basis of the command value (DRM) which executes a command function as a function of the driver's desire;
- a safety step (E6, E7) which activates, in the event of an electrotechnical defect, a safety function imposing a zero torque on the electric machine (22) and which disconnects the battery (26);
- a priority selection step (E8) which activates by priority the safety function in the event of an electrotechnical defect;
- steps (E9, E10) of controlling the electrical items which transmit control signals to the battery (26) and to the electric machine (22) on the basis of the function selected in the previous step.

3. Device for controlling and supervising a hybrid vehicle comprising:
- a driving engine (20);
- an electric machine (22) able on command to operate as driving motor and supplied by a battery (26), **characterized in that** it comprises:
- a module (112) for detecting operating state of the hybrid vehicle which produces an operating state vector (E); and
- a module (118) making it possible to establish a setting (C(E)) on the basis of the operating state vector (E), said module (118) cooperating with a stability control unit for the vehicle (120) and an electrotechnical protection unit (122) for the electrical items of the vehicle, said setting (C(E)) being applied to the electric machine alone (22) of the hybrid vehicle, and making it possible, after having detected (S1) the operating state (E) of the vehicle, to carry out:
- a step (S2) for producing in response an operating setting (C(E)) for the electric machine (22) only, without demanding any particular control of the engine (20);
- a testing step (S3) to ensure compliance with a stability constraint for the vehicle; and
- a testing step (S4) to ensure compliance with a protection constraint for the electrical items of the vehicle.

4. Control and supervision device (10) according to Claim 3, **characterized in that** it comprises:
- means (M1) for collecting information relating to the operating state of the engine and of the electric machine (22) as well as the driver's desire;
- means (M2) for interpreting, as a function of the information collected by the collection means (M1), the driver's desire;
- control means (M3) selecting a command function and/or a safety function on the basis of the interpretation of the driver's desire arising from the interpretation means (M2);
- means (M4) for commanding, on the basis of the command and/or safety function selected by the control means (M3), components for monitoring the electrical items such as the battery (26) and the electric machine (22);
- and finally means (M5) for shaping the output signals coming from the command means (M4).

5. Control and supervision device (10) according to Claim 4, **characterized in that** it comprises three successive functional layers:
- a first layer bundling together the means (M1, M2) which generate a variable (DRM) activating the command;
- a second layer bundling together the means (M3) which execute the command control on the basis of the value of the command variable (DRM);
- a third layer bundling together the means (M4) which execute the command of the components for monitoring the electrical items.

6. Control and supervision device (10) of a hybrid vehicle according to Claim 5, **characterized in that** the means for collecting information (M1) comprise several sensors of different kind which pertain to the signals in particular:
- on the control of the engine (20), the position of the acceleration pedal, the effective mean torque, the position of the brake pedal, the status of the engine (20), etc;
- on the electrical items of the vehicle in particular the speed of the electric motor (22), the various operating defects, the temperature of the battery (26), the voltage and the current of the battery (26), the acceptable power under charge and under discharge through the battery (26) and its state of charge;
- on the dynamics of the vehicle in particular the speeds of the four wheels, the braking pressures of the four wheels, a measurement of the longitudinal and lateral acceleration of the vehicle, a measurement of angle of deflection of the steering wheel, a measurement of the yaw rate;
- and signals such as the emergency stop wired signals, various dashboard switches conveying the driver's desire, signals of the isolation defect detectors coming from the battery (26).

7. Control and supervision device (10) of a hybrid vehicle according to Claim 6, **characterized in that** the means (M2) for interpreting the driver's desire comprise means for analyzing the information coming from the collection means (M1) and transmitting as a function of this information a variable (DRM) whose value selects a associated command or safety function in the following control means (M3).

8. Control and supervision device (10) of a hybrid vehicle according to Claim 7, **characterized in that** the variable (DRM) is associated with means for selecting one of the command and/or safety functions in the control means (M3), including in particular:
- a function comprising means for activating the starting of the vehicle (SBY);
- a function which bundles together means for activating the electrotechnical part when the driver wishes to start the hybrid vehicle (START);
- a function which bundles together means for turning off electrotechnical items when the vehicle is stopped (STOP);
- a function which bundles together means for placing the electric machine (22) in a standby mode where the electrical torque is zero, under deceleration in pure thermal mode (FU_42);
- a function which bundles together means for recovering electrical energy, under deceleration in hybrid mode (FU_44);
- a function which bundles together means for placing the electric actuator in standby mode where the electrical torque is zero, under acceleration in pure thermal mode (FD_42);
- a function which bundles together means for allowing the driving of the vehicle in 4-wheel drive mode, the electrical torque is proportional to the crankshaft torque or calculated so as to optimize the motricity of the vehicle, under acceleration in hybrid mode (FD_44);
- a function which bundles together means for calculating the electrical torque on the basis of the acceleration pedal position so as to establish a ramping of automatic gearbox type: a ramping in torque and a ramping in speed onwards of a given threshold, in pure electrical mode (ZEV);
- and a safety function which bundles together means for dispatching a zero torque setting to the electric machine and for disconnecting the high-voltage main contactor so as to isolate the battery (26) from the remainder of the vehicle in the event of a major operating defect of the electrotechnical part.

9. Control and supervision device (10) of a hybrid vehicle according to Claim 8, **characterized in that** the means M3 comprises a means (30) which limits the value of electrical torque setting so as to satisfy the stability criteria of the vehicle.

10. Control and supervision device (10) of a hybrid vehicle according to Claim 9, **characterized in that** the means (M4) for commanding the components for monitoring the electrical items comprise means for monitoring the battery (block 4a) so as to isolate the battery (26) from the remainder of the vehicle.

11. Control and supervision device (10) of a hybrid vehicle according to Claim 10, **characterized in that** the means (M4) for commanding the components for monitoring the electrical items comprise a command means (block 4b) for the electric machine (22) which comprises means for transmitting to the electric machine a torque setting (C_opt) suited to the operating limitations of the electrical items and to vehicle stability.

## Patentansprüche

1. Verfahren zur Kontrolle und Überwachung eines Hybridfahrzeugs, das aufweist
- einen Antriebs-Verbrennungsmotor (20);
- eine elektrische Maschine (22), die auf Befehl als Antriebsmotor arbeiten kann und von einer Batterie (26) gespeist wird,
das darin besteht, den Zustand (S1) des Betriebs (E) des Fahrzeugs zu erfassen;
und das **dadurch gekennzeichnet ist, dass** es aufweist:
- einen Schritt (S2), um als Antwort einen Betriebssollwert (C(E)) nur der elektrischen Maschine (22) zu erzeugen, ohne eine besondere Steuerung des Verbrennungsmotors (20) zu fordern;
- einen Testschritt (S3), um ein Einhalten einer Stabilitätsbedingung des Fahrzeugs zu gewährleisten; und
- einen Testschritt (S4), um ein Einhalten einer Schutzbedingung der elektrischen Organe des Fahrzeugs zu gewährleisten.

2. Kontroll- und Überwachungsverfahren nach Anspruch 1, **dadurch gekennzeichnet, dass** es aufweist:
- Schritte des Sammelns von Informationen (E1, E2, E3) über den Betriebszustand des Verbrennungsmotors (20), des elektrischen Stellglieds (22) sowie den Willen des Fahrers;
- einen Schritt (E4), um einen Regelwert (DRM) auf der Basis der gesammelten Informationen zu erzeugen, der Regelfunktionen regelt;
- einen Regelschritt (E5) des elektrischen Stellglieds (22) auf der Basis des Regelwerts (DRM), de r eine Regelfunktion abhängig vom Willen des Fahrers ausführt;
- einen Sicherheitsschritt (E6, E7), der bei einer elektrotechnischen Störung eine Sicherheitsfunktion aktiviert, die der elektrischen Maschine (22) ein Drehmoment Null aufzwingt und die Batterie (26) abschaltet;
- einen Schritt der prioritären Auswahl (E8), der bei einer elektrotechnischen Störung prioritär die Sicherheitsfunktion aktiviert;
- Steuerschritte (E9, E10) der elektrischen Organe, die Steuersignale an die Batterie (26) und an die elektrische Maschine (22) auf der Basis der im vorhergehenden Schritt ausgewählten Funktion übertragen.

3. Vorrichtung zur Kontrolle und Überwachung eines Hybridfahrzeugs, die aufweist:
- einen Antriebs-Verbrennungsmotor (20);
- eine elektrische Maschine (22), die auf Befehl als Antriebsmotor arbeiten kann und von einer Batterie (26) gespeist wird,
**dadurch gekennzeichnet, dass** sie aufweist:
- ein Modul (112) zur Betriebszustandserfassung des Hybridfahrzeugs, das einen Betriebszustandsvektor (E) erzeugt; und
- ein Modul (118), das es ermöglicht, einen Sollwert (C(E)) auf der Basis des Betriebszustandsvektors (E) zu erstellen, wobei das Modul (118) mit einer Stabilitätskontrolleinheit des Fahrzeugs (120) und mit einer elektrotechnischen Schutzeinheit (122) der elektrischen Organe des Fahrzeugs zusammenwirkt, wobei der Sollwert (C(E)) nur an die elektrische Maschine (22) des Hybridfahrzeugs angewendet wird, und es nach Erfassung (S1) des Betriebszustands (E) des Fahrzeugs ermöglicht, durchzuführen:
- einen Schritt (S2), um als Antwort einen Betriebssollwert (C(E)) nur der elektrischen Maschine (22) zu erzeugen, ohne eine besondere Steuerung des Verbrennungsmotors (20) zu erfordern;
- einen Testschritt (S3), um eine Einhaltung einer Stabilitätsbedingung des Fahrzeugs zu gewährleisten; und
- einen Testschritt (S4), um eine Einhaltung einer Schutzbedingung der elektrischen Organe des Fahrzeugs zu gewährleisten.

4. Kontroll- und Überwachungsvorrichtung (10) nach Anspruch 3, **dadurch gekennzeichnet, dass** sie aufweist:
- Einrichtungen (M1), um Informationen betreffend den Betriebszustand des Verbrennungsmotors und der elektrischen Maschine (22) sowie den Willen des Fahrers zu sammeln;
- Einrichtungen (M2), um abhängig von den von den Sammeleinrichtungen (M1) gesammelten Informationen den Willen des Fahrers zu interpretieren;
- Steuereinrichtungen (M3), die eine Regelfunktion und/oder eine Sicherheitsfunktion auf der Basis der Interpretation des Willens des Fahrers auswählen, die von den Interpretationseinrichtungen (M2) stammt;
- Einrichtungen (M4), um auf der Basis der von den Steuereinrichtungen (M3) ausgewählten Regel- und/oder Sicherheitsfunktion Überwachungsbauteile der elektrischen Organe wie der Batterie (26) und der elektrischen Maschine (22) zu regeln;
- und schließlich Einrichtungen (M5) zur Formatierung der von der Regeleinrichtung (M4) kommenden Ausgangssignale.

5. Kontroll- und Überwachungsvorrichtung (10) nach Anspruch 4, **dadurch gekennzeichnet, dass** sie drei aufeinanderfolgende Funktionsschichten aufweist:
- eine erste Schicht, die die Einrichtungen (M1, M2) zusammenfasst, die eine Variable (DRM) erzeugen, die die Regelung aktiviert;
- eine zweite Schicht, die die Einrichtungen (M3) zusammenfasst, die die Regelsteuerung auf der Basis des Werts der Regelvariablen (DRM) ausführen;
- eine dritte Schicht, die die Einrichtungen (M4) zusammenfasst, die die Regelung der Überwachungsbauteile der elektrischen Organe ausführen.

6. Kontroll- und Überwachungsvorrichtung (10) eines Hybridfahrzeugs nach Anspruch 5, **dadurch gekennzeichnet, dass** die Einrichtungen zum Sammeln von Informationen (M1) mehrere Sensoren unterschiedlicher Beschaffenheit aufweisen, die insbesondere Signale erfassen:
- über die Kontrolle des Verbrennungsmotors (20), die Stellung des Gaspedals, das mittlere effektive Drehmoment, die Stellung des Bremspedals, den Status des Verbrennungsmotors (20), usw.;
- über die elektrischen Organe des Fahrzeugs, insbesondere die Geschwindigkeit des Elektromotors (22), die verschiedenen Betriebsstörungen, die Temperatur der Batterie (26), die Spannung und den Strom der Batterie (26), die akzeptable Lade- und Entladeleistung der Batterie (26) und ihren Ladezustand;
- über die Dynamik des Fahrzeugs, insbesondere die Geschwindigkeiten der vier Räder, die Bremsdrücke der vier Räder, eine Messung der Längs- und Seitenbeschleunigung des Fahrzeugs, eine Einschlagwinkelmessung des Lenkrads, eine Messung der Giergeschwindigkeit;
- und Signale, wie die drahtgebundenen Nothalt-Signale, der verschiedenen Schalter des Armaturenbretts, die den Willen des Fahrers ausdrücken, Signale der Isolationsfehler-Detektoren, die von der Batterie (26) kommen.

7. Kontroll- und Überwachungsvorrichtung (10) eines Hybridfahrzeugs nach Anspruch 6, **dadurch gekennzeichnet, dass** die Einrichtungen (M2) zur Interpretation des Willens des Fahrers Einrichtungen aufweisen, um die von der Sammeleinrichtung (M1) kommenden Informationen zu analysieren und abhängig von diesen Informationen eine Variable (DRM) zu übertragen, deren Wert eine zugeordnete Regel- oder Sicherheitsfunktion in der folgenden Steuereinrichtung (M3) auswählt.

8. Kontroll- und Überwachungsvorrichtung (10) eines Hybridfahrzeugs nach Anspruch 7, **dadurch gekennzeichnet, dass** die Variable (DRM) Einrichtungen zugeordnet ist, um eine der Regel- und/oder Sicherheitsfunktionen in der Steuereinrichtung (M3) auszuwählen, darunter insbesondere:
- eine Funktion, die Einrichtungen aufweist, um den Start des Fahrzeugs (SBY) zu aktivieren;
- eine Funktion, die Einrichtungen zusammenfasst, um den elektrotechnischen Teil zu aktivieren, wenn der Fahrer das Hybridfahrzeug (START) starten will;
- eine Funktion, die Einrichtungen zusammenfasst, um elektrotechnische Organe beim Stillstand des Fahrzeugs (STOP) auszuschalten;
- eine Funktion, die Einrichtungen zusammenfasst, um die elektrische Maschine (22) in einen Wartemodus zu bringen, in dem das elektrische Drehmoment Null ist, beim Bremsen im rein verbrennungsmotorischen Modus (FU 42);
- eine Funktion, die Einrichtungen zusammenfasst, um elektrische Energie wiederzugewinnen, beim Bremsen im hybriden Modus (FU_44);
- eine Funktion, die Einrichtungen zusammenfasst, um das elektrische Stellglied in den Wartemodus zu bringen, in dem das elektrische Drehmoment Null ist, bei einer Beschleunigung im rein verbrennungsmotorischen Modus (FD 42);
- eine Funktion, die Einrichtungen zusammenfasst, um den Antrieb des Fahrzeugs im Vierradantrieb zu ermöglichen, wobei das elektrische Drehmoment proportional zum Kurbelwellen-Drehmoment ist oder so berechnet wird, dass die Antriebskraft des Fahrzeugs beim Beschleunigen im hybriden Modus (FD_44) optimiert wird;
- eine Funktion, die Einrichtungen zusammenfasst, um das elektrische Drehmoment ausgehend von der Gaspedalstellung zu berechnen, um ein Schleichen vom Typ Automatikgetriebe: ein Drehmoment-Schleichen und ein Geschwindigkeits-Schleichen ausgehend von einem gegebenen Schwellwert, im rein elektrischen Modus (ZEV) aufzubauen;
- und eine Sicherheitsfunktion, die Einrichtungen zusammenfasst, um einen Drehmomentsollwert Null an die elektrische Maschine zu senden, und um den Hochspannungs-Hauptkontaktschalter auszuschalten, um die Batterie (26) bei einer größeren Betriebsstörung des elektrotechnischen Teils vom Rest des Fahrzeugs zu isolieren.

9. Kontroll- und Überwachungsvorrichtung (10) eines Hybridfahrzeugs nach Anspruch 8, **dadurch gekennzeichnet, dass** die Einrichtung M3 eine Einrichtung (30) aufweist, die den Sollwert des elektrischen Drehmoments so begrenzt, dass die Stabilitätskriterien des Fahrzeugs erfüllt werden.

10. Kontroll- und Überwachungsvorrichtung (10) eines Hybridfahrzeugs nach Anspruch 9, **dadurch gekennzeichnet, dass** die Einrichtungen (M4) zum Regeln der Überwachungsbauteile der elektrischen Organe Einrichtungen zur Überwachung der Batterie (Block 4a) enthalten, um die Batterie (26) vom Rest des Fahrzeugs zu isolieren.

11. Kontroll- und Überwachungsvorrichtung (10) eines Hybridfahrzeugs nach Anspruch 10, **dadurch gekennzeichnet, dass** die Einrichtungen (M4) zum Regeln der Überwachungsbauteile der elektrischen Organe eine Regeleinrichtung (Block 4b) der elektrischen Maschine (22) enthalten, die Einrichtungen enthält, um an die elektrische Maschine einen Drehmomentsollwert (C_opt) zu übertragen, der an die Betriebsbegrenzungen der elektrischen Organe und an die Fahrzeugstabilität angepasst ist.
